# EUROPÄISCHE PATENTSCHRIFT

(11) **EP 2 740 946 B1**
(45) Veröffentlichungstag und Bekanntmachung des Hinweises auf die Patenterteilung: **25.10.2017**
(21) Anmeldenummer: 13194980.2
(22) Anmeldetag: 29.11.2013
(51) Int. Cl.: F16B 5/02, G05G 1/12

(54) **Verdrehgriff mit Mindestwert einer Spannkraft**
Twist handle with minimum clamping force
Poignée rotative ayant une valeur minimale d'une force de serrage

(30) Priorität: 07.12.2012 DE 102012222508
(43) Veröffentlichungstag der Anmeldung: 11.06.2014
(73) Patentinhaber: Kipp Verpachtungen e.K., 72172 Sulz a.N. (DE)
(72) Erfinder: Gierke, Veronika, 84034 Landshut (DE); Herold, Joscha, 80638 München (DE); Benz, Hans-Martin, 78661 Dietingen-Irslingen (DE); Müller, Boris, 72348 Rosenfeld (DE); Schanz, Hans, 72189 Vöhringen (DE)
(74) Vertreter: Kohler Schmid Möbus Patentanwälte

(56) Entgegenhaltungen:
- DE-U1- 29 812 351
- DE-U1-202006 018 255
- US-A- 6 112 619

## Beschreibung

Die Erfindung betrifft eine Drehgriffanordnung, umfassend
- ein erstes Griffelement, und
- ein zweites Griffelement,
wobei das erste Griffelement bezüglich einer Griffelementachse drehbar relativ zum zweiten Griffelement angeordnet ist,
wobei das erste Griffelement gegenüber dem zweiten Griffelement zumindest zwischen einer Grundstellung und einer verdrehten Stellung, in der ein gegenseitiger Anschlag ein weiteres Verdrehen blockiert, verdrehbar ist,
wobei eine Kopplungsvorrichtung mit mindestens einem Federelement vorgesehen ist, derart dass das mindestens eine Federelement durch Verdrehen des ersten Griffelements gegenüber dem zweiten Griffelement aus der Grundstellung in Richtung der verdrehten Stellung gegen eine Federkraft verformt wird,
und wobei durch mindestens eine Markierung an der Drehgriffanordnung
und/oder durch den Aufbau der Drehgriffanordnung die Grundstellung von der verdrehten Stellung eindeutig unterscheidbar ist.

Eine solche Grifffanordnung ist durch die US 6,112,619 bekannt geworden.

Drehgriffe werden in vielfältiger Weise eingesetzt, um Bauteile an Maschinen oder Geräten zu verspannen, insbesondere zu verklemmen. Im einfachsten Fall umfasst ein Drehgriff ein Griffelement und ein mit diesem starr verbundenes Wellenelement. Das Griffelement dient dazu, der Hand des Bedieners einen sicheren Griff zu ermöglichen. Das Wellenelement überträgt die vom Bediener aufgebrachte Kraft bzw. das aufgebrachte Drehmoment.

Der Sicherheitssterngriff GN 5337.8 aus dem Katalog Ganter Griff Normelemente 15.1, Seite 356-357 (05/2012), umfasst ein erstes und ein zweites Griffelement, wobei das erste Griffelement für einen Zugriff durch die Hand des Bedieners ausgebildet ist und gegenüber dem zweiten Griffelement drehbar ist. Im zweiten Griffelement ist als Wellenelement ein Bauteil mit einem Innengewinde starr befestigt. Bei Rechtsdrehung (Klemmrichtung) sind die beiden Griffelemente über einen Anschlag starr gekoppelt. Bei Linksdrehung (Entklemmrichtung) ohne eingesteckten Sicherheitsschlüssel bewirkt ein Ratschenmechanismus, dass das erste und zweite Griffelement bei Überschreiten eines gewissen Drehmoments entkoppelt werden (Durchdrehen des Ratschenmechanismus); dadurch kann ein Entklemmen ohne eingesteckten Sicherheitsschlüssen verhindert werden.

Die US 6,112,619 beschreibt eine Handradabdeckung für eine Gasflasche, mit einem Oberteil, das gegen das Unterteil verdrehbar ist. Das Oberteil weist Verriegelungsfortsätze auf, die aufwärts verlaufende Rampenbauteile des Unterteils hintergreifen. Am Ende der Rampenbauteile ist ein Raum für die Verriegelungsfortsätze eingerichtet. Bei Drehung des Oberteils in eine erste Drehrichtung wird das Oberteil entlang der Rampenbauteile und durch den Druck einer Felder entlang der Drehachse vom Unterteil weg verfahren, bis die Verriegelungsfortsätze in den besagten Raum gelangt sind. In dieser Drehstellung sind rote Markierungen sichtbar. Um das Oberteil in eine zweite Drehrichtung zurückzudrehen, muss das Oberteil eingedrückt werden, um die Verriegelungsfortsätze von den Rampenbauteilen zu entkoppeln.

### Aufgabe der Erfindung

Der Erfindung liegt die Aufgabe zugrunde, eine Drehgriffanordnung zur Verfügung zu stellen, mit der auf einfache Weise eine Verspannung, insbesondere Verklemmung, mit einem Mindestdrehmoment sichergestellt werden kann, und gleichzeitig eine Verklemmung mit höheren Drehmomenten möglich bleibt.

### Kurze Beschreibung der Erfindung

Diese Aufgabe wird gelöst durch eine Griffanordnung der eingangs genannten Art, die dadurch gekennzeichnet ist, dass die Kopplungsvorrichtung an einem der Griffelemente einen relativ zu diesem Griffelement gegen das Federelement verschiebbaren Kopplungsbolzen ausbildet, und am anderen der Griffelemente ein Führungselement ausbildet, wobei beim Verdrehen des ersten Griffelements gegen das zweite Griffelement das Führungselement zumindest über einen Teil des relativen Drehwinkels ϕ zwischen der Grundstellung und der verdrehten Stellung mit dem Kopplungsbolzen in Kontakt steht und diesen relativ zu dem Griffelement, an dem er ausgebildet ist, gegen das Federelement verfährt oder vom Federelement weg verfahren lässt, und dass die Drehgriffanordnung ein Wellenelement umfasst, wobei das Wellenelement starr mit dem zweiten Griffelement verbunden ist.

Mit der erfindungsgemäßen Drehgriffanordnung kann aus der Grundstellung von erstem und zweitem Griffelement heraus ein Verspannen oder Verklemmen erfolgen. Dabei dreht ein Bediener typischerweise per Hand das erste Griffelement; mit anderen Worten der Bediener legt ein Drehmoment an das erste Griffelement an.

Typischerweise ist in einer ersten Phase der Verspannbewegung das Wellenelement noch leichtgängig verdrehbar, so dass das erste Griffelement im Wesentlichen in der Grundstellung das zweite Griffelement (und damit auch das starr verbundene Wellenelement) mitnehmen kann, ohne die Federkraft zu überwinden; die relative Drehposition von ersten und zweitem Griffelement ändert sich nicht oder nur geringfügig. Man beachte, dass bei schwer verdrehbarem Wellenelement die erste Phase sehr kurz sein kann oder gar ganz entfallen kann.

In einer zweiten Phase der Verspannbewegung wird das Wellenelement schwerer verdrehbar. Durch das vom Bediener aufgebrachte Drehmoment kann das erste Griffelement die Federkraft des mindestens einen Federelements überwinden und von der Grundstellung in die verdrehte Stellung verdreht werden. Da die Federkraft des mindestens einen Federelements hierfür überwunden werden muss, wirkt auf das Wellenelement hierbei ein gewisses Mindestdrehmoment, welches von der Federkraft und der Geometrie der Kopplungsvorrichtung (etwa der Steilheit von Keilflächen/Rampen) abhängt.

Gemäß der Erfindung ist vorgesehen, dass die Kopplungsvorrichtung an einem der Griffelemente einen gegen das Federelement verschiebbaren Kopplungsbolzen ausbildet, und am anderen der Griffelemente ein Führungselement ausbildet, wobei beim Verdrehen des ersten Griffelements gegen das zweite Griffelement das Führungselement zumindest über einen Teil des relativen Drehwinkels ϕ zwischen der Grundstellung und der verdrehten Stellung mit dem Kopplungsbolzen in Kontakt steht und diesen gegen das Federelement verfährt oder vom Federelement weg verfahren lässt. Über das Führungselement, insbesondere die Steilheit von durch das Führungselement ausgebildeten Rampen, kann auf einfache Weise das notwendige Moment zur Überwindung der Federkraft des Federelements eingestellt werden. Ebenso kann über das Federelement (meist eine gewendelte Druckfeder) und den Kopplungsbolzen (etwa dessen Länge) auf einfache Weise die Federkraft eingestellt werden. Dieser Aufbau ist praktisch bewährt.

In der verdrehten Stellung ist schließlich durch den gegenseitigen Anschlag eine direkte Kraftübertragung und Bewegungsübertragung vom ersten Griffelement auf das zweite Griffelement und damit auf das Wellenelement gegeben. Soweit es die Festigkeit der Materialien der Drehgriffanordnung zulässt, kann in dieser dritten Phase ein im Prinzip unbegrenztes Drehmoment auf das Wellenelement übertragen werden. Die relative Drehposition von erstem und zweitem Griffelement ändert sich in der dritten Phase nicht mehr merklich. Falls gewünscht, kann auf die Aufbringung von weiterem Drehmoment in der verdrehten Stellung auch verzichtet werden. Man beachte, dass der Anschlag durch Teile der Kopplungsvorrichtung ausgebildet sein kann, oder auch (alternativ oder zusätzlich) ein separater Anschlag ausgebildet sein kann.

Durch eine geeignete Markierung (oder mehrere Markierungen) und/oder durch einen geeigneten Aufbau der Drehgriffanordnung kann die Grundstellung von der verdrehten Stellung unterschieden werden. Liegt die verdrehte Stellung vor, kann damit von Betrachtern auf ein vorangegangenes Verspannen geschlossen werden, bei dem das oben erwähnte Mindestdrehmoment gewirkt hat. Insbesondere kann dadurch eine sehr einfache Sicherheitskontrolle erfolgen, etwa wenn ein Verklemmen mit dem Mindestdrehmoment Voraussetzung für eine sichere Verwendung der mit der erfindungsgemäßen Drehgriffanordnung versehenen Einrichtung ist. Bevorzugt ist die Grundstellung von der verdrehten Stellung nicht nur optisch (sichtbar), sondern auch durch Betasten (fühlbar) gut zu unterscheiden; typischerweise werden Flächenabschnitte an den einander zugewandten Stirnseiten der Griffelemente je nach Verdrehstellung durch Überlappung verdeckt oder durch Versatz freigelegt.

Markierungen, die zur Unterscheidung der Grundstellung und der verdrehten Stellung dienen können, umfassen beispielsweise Pfeile, Striche und Punkte, aufgemalt und/oder als Relief gestaltet, oder auch Flächen, bevorzugt farbig markiert und/oder mit Relief versehen, die je nach Stellung verdeckt oder freigelegt sind. Typischerweise ist für eine einfache Unterscheidbarkeit der beiden Stellungen (von außen) über den Aufbau vorgesehen, dass das zweite Griffelement zumindest teilweise außerhalb des ersten Griffelements angeordnet ist, und dass die beiden Griffelemente jeweils nicht rotationssymmetrisch bezüglich der Griffelementachse ausgebildet sind.

Eine erfindungsgemäße Drehgriffanordnung kann insbesondere bei Sportgeräten, insbesondere Reha-Sportgeräten, eingesetzt werden, insbesondere um Verstellpositionen von Sitzen, Handgriffen, Pedalen und/oder sonstigen Gestängen, die der Anpassung an die Körpermaße eines Verwenders dienen, einzustellen.

### Bevorzugte Ausführungsformen der Erfindung

Bei einer bevorzugten Ausführungsform der erfindungsgemäßen Drehgriffanordnung ist vorgesehen, dass in einer der Stellungen, insbesondere der Grundstellung, eine farbliche Markierung an einem der Griffelemente, insbesondere am zweiten Griffelement, durch das andere Griffelement, insbesondere das erste Griffelement, verdeckt ist, und in der verdrehten Stellung die farbliche Markierung freiliegt. Dadurch können die beiden Stellungen besonders einfach unterschieden werden; die farbliche Markierung unterstützt den sich aus dem Verdecken bzw. Freiliegen eines Griffelementteils (bevorzugt einer Fläche, die im Wesentlichen senkrecht zur Griffelementachse verläuft) ergebenden Unterschied der äußeren Gestalt. Die farbliche Markierung ist typischerweise gelb, orange oder rot; sie kontrastiert mit der Farbe (oder den Farben) der Griffelemente.

Bevorzugt ist auch eine Ausführungsform, die vorsieht, dass zumindest ein Teil des zweiten Griffelements außerhalb des ersten Griffelements angeordnet ist, dass die Griffelemente eine N-zählige Symmetrie bezüglich der Griffelementachse aufweisen, und dass sich die Grundstellung und die verdrehte Stellung um einen relativen Drehwinkel ϕ von zumindest näherungsweise ϕ=360°/(2*N) unterscheiden. Dies hat sich in der Praxis bewährt. Bevorzugt sind in der Grundstellung die Übergänge zwischen erstem und zweitem Griffelement glatt, und in der verdrehten Stellung gestuft. Bevorzugt ist weiterhin N ungerade, insbesondere N=3 oder N=5.

Bei einer vorteilhaften Ausführungsform muss unmittelbar bei Verlassen der Grundstellung das Federelement gegen die Federkraft verformt werden, insbesondere maximal verformt werden. Dadurch bleibt bei Drehmomenten unterhalb desjenigen Drehmoments, das für die Überwindung der Federkraft notwendig ist, die relative Drehposition von erstem und zweitem Griffelement konstant.

Besonders bevorzugt ist eine Ausführungsform, bei der auch beim Verdrehen des ersten Griffelements gegenüber dem zweiten Griffelement aus der verdrehten Stellung in Richtung der Grundstellung das Federelement gegen die Federkraft verformt werden muss. Dadurch wird die verdrehte Stellung automatisch gesichert; ein entsprechender Aufbau der Kopplungsvorrichtung ist auch besonders einfach.

Vorteilhaft ist eine Weiterbildung dieser Ausführungsform, bei der unmittelbar bei Verlassen der verdrehten Stellung das Federelement gegen die Federkraft verformt werden muss, insbesondere maximal verformt werden muss. Dadurch bleibt bei kleinen Drehmomenten die Drehposition wiederum unverändert.

Besonders vorteilhaft ist eine Weiterbildung der obigen Ausführungsform, die vorsieht, dass der Betrag des maximal notwendigen Moments |Mₛₚₐₙₙ|, um das erste Griffelement gegenüber dem zweiten Griffelement aus der Grundstellung in die verdrehte Stellung zu überführen, größer ist als der Betrag des maximal notwendigen Moments |Mₗₒₛ|, um das erste Griffelement gegenüber dem zweiten Griffelement aus der verdrehten Stellung in die Grundstellung zu überführen, insbesondere wobei |Mₛₚₐₙₙ| ≥ 3*|Mₗₒₛ|. Unterschiedliche notwendige Momente für die unterschiedlichen Überführungsrichtungen können beispielsweise über unterschiedlich steile Führungsrampen (siehe unten) für ein Federelement eingerichtet werden. Bei dieser Ausführungsform ist sichergestellt, dass kleine Auslenkungen des ersten Griffelements aus der (vollständig) verspannten Stellung auf die Grundstellung zu nur zu einem geringen Kraftübertrag auf das Wellenelement führen können, so dass eine erfolgte Verspannung oder Verklemmung beim Überführen in die verspannte Stellung durch eine solche kleine Auslenkung allenfalls unwesentlich gelockert wird.

Besonders bevorzugt ist eine Ausführungsform, bei der das Führungselement den Kopplungsbolzen mit einer ersten Rampe von der Grundstellung weg in eine maximal verformte Stellung des Federelements führt, und den Kopplungsbolzen mit einer zweiten, gegenüber der ersten Rampe flacheren Rampe von der verdrehten Stellung weg in die maximal verformte Stellung des Federelements führt. Durch diese beiden Rampen kann das erforderliche Moment Mₛₚₐₙₙ für das Überführen in die verdrehte Stellung gegenüber dem erforderlichen Moment Mₗₒₛ auf einfache Weise betragsmäßig höher eingestellt werden.

Vorteilhaft ist auch eine Ausführungsform, bei der das erste Griffelement von der Grundstellung weg rechts herum in Richtung der verdrehten Stellung drehbar ist. Durch diese Ausführung (Rechtsausführung) kann ein Mindestdrehmoment beim Verspannen oder Verklemmen sichergestellt werden. Alternativ kann auch das erste Griffelement von der Grundstellung weg nach links herum in Richtung der verdrehten Stellung drehbar sein (Linksausführung).

In einer bevorzugten Ausführungsform ist ein Hilfsanschlag vorgesehen, der auch in der Grundstellung ein weiteres Verdrehen des ersten Griffelements gegenüber dem zweiten Griffelement blockiert. Dadurch kann in der Grundstellung Kraft unmittelbar auf das Wellenelement übertragen werden, etwa zum Lösen einer Verspannung oder Verklemmung.

In einer bevorzugten Ausführungsform ist vorgesehen, dass das Wellenelement ein Außengewinde aufweist und aus dem zweiten Griffelement herausragt. Das Außengewinde kann in eine Gewindebohrung einer Struktur leicht eingeschraubt werden. Bei einer anderen Ausführungsform weist das Wellenelement ein Innengewinde auf, insbesondere wobei das Wellenelement ganz oder teilweise im zweiten Griffelement aufgenommen ist oder in das zweite Griffelement integriert ist. In das Innengewinde kann ein Bolzen einer Struktur eingeschraubt werden. Man beachte, dass das Wellenelement auch für einen Presssitz bzw. mit einer Passbohrung, insbesondere auch mit einem Sicherungsstift, oder dergleichen ausgebildet sein kann. Das Wellenelement dient der Übertragung von Drehmoment zu einer Struktur, an der die Drehgriffanordnung verwendet wird.

Schließlich ist noch bevorzugt eine Ausführungsform, bei der der relative Drehwinkel ϕ des ersten und zweiten Griffelements zwischen der Grundstellung und der verdrehten Stellung zwischen 22,5° und 90°, bevorzugt zwischen 30° und 60°, beträgt. Diese Drehwinkel lassen sich leicht von Hand bedienen und sind in der Praxis bewährt.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1a: eine Ausführungsform einer erfindungsgemäßen Drehgriffanordnung, in schematischer Seitenansicht, mit dreizähliger Symmetrie der Griffelemente und einem Wellenelement mit Außengewinde, in Grundstellung;
- Fig. 1b: die Ausführungsform von Fig. 1a, in schematischer Seitenansicht, um 60° gedreht dargestellt gegenüber Fig. 1a;
- Fig. 1c: die Ausführungsform von Fig. 1a, in schematischer Aufsicht;
- Fig. 1d: eine Variante der Ausführungsform von Fig. 1a, in schematischer, teilweise geschnittener Seitenansicht, mit einem Wellenelement mit Innengewinde;
- Fig. 2a: die Ausführungsform von Fig. 1a, in schematischer Seitenansicht, in verdrehter Stellung;
- Fig. 2b: die Ausführungsform von Fig. 2a, in schematischer Seitenansicht, um 60° gedreht dargestellt gegenüber Fig. 2a;
- Fig. 2c: die Ausführungsform von Fig. 2a, in schematischer Aufsicht;
- Fig. 3a: eine schematische Aufsicht auf die Stirnfläche des zweiten Griffelements, die dem ersten Griffelement zugewandt ist, bei einer nicht erfindungsgemäßen Ausgestaltung einer Kopplungsvorrichtung, mit einem elastisch spreizbaren Führungskanal-Bauteil;
- Fig. 3b: eine schematische Aufsicht auf die Stirnfläche des ersten Griffelements, die dem zweiten Griffelement zugewandt ist, bei der Kopplungsvorrichtung von Fig. 3a;
- Fig. 4a: eine schematische Aufsicht auf die Stirnfläche des zweiten Griffelements, die dem ersten Griffelement zugewandt ist, bei einer Ausgestaltung einer Kopplungsvorrichtung gemäß der Erfindung, mit einem verschiebbaren Kopplungsbolzen;
- Fig. 4b: eine schematische Aufsicht auf die Stirnfläche des ersten Griffelements, die dem zweiten Griffelement zugewandt ist, bei der Kopplungsvorrichtung von Fig. 4a.

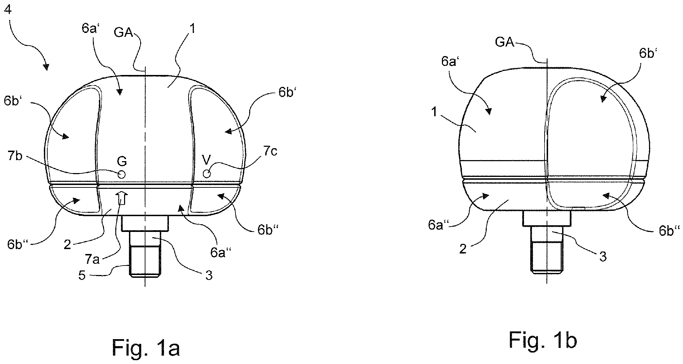

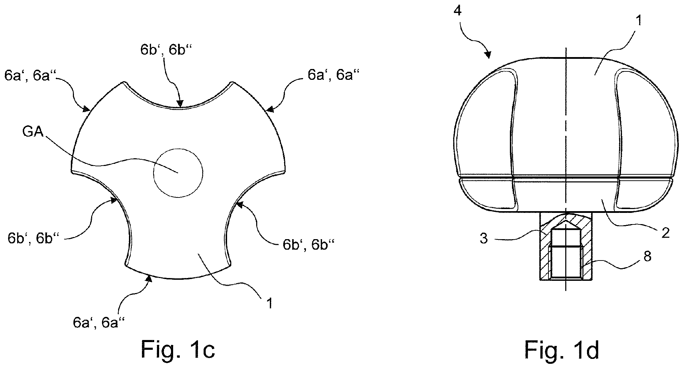

Die Figuren 1a bis 1c zeigen in schematischen Seitenansichten (Fig. 1a, 1b) und einer schematischen Aufsicht (Fig. 1c) eine erfindungsgemäße Drehgriffanordnung 4, umfassend ein erstes Griffelement 1, ein zweites Griffelement 2 und ein Wellenelement 3. Das erste Griffelement 1 ist drehbar bezüglich einer Griffelementachse GA gegenüber dem zweiten Griffelement 2 gelagert. Am zweiten Griffelement 2 ist wiederum das Wellenelement 3 starr befestigt; es ragt hier in axialer Richtung (in Fig. 1 a nach unten) aus dem zweiten Griffelement 2 heraus. Mit der Griffanordnung 4 kann manuell ein Drehmoment über das Wellenelement 3, das hier mit einem Außengewinde 5 versehen ist, in eine nicht näher dargestellte Struktur eingebracht werden. Dazu wird die Griffanordnung 4 am ersten Griffelement 1 mit der Hand ergriffen und gedreht bzw. verspannt und entspannt.

Die Griffelemente 1, 2 sind hier mit einer dreizähligen Symmetrie aufgebaut. Sie bilden jeweils drei konvexe Bereiche 6a', 6a" und drei konkave Bereiche 6b', 6b" aus. In der in Fig. 1a-1c gezeigten Grundstellung fluchten die konvexen Bereiche 6a', 6a" der beiden Griffelemente 1, 2 in axialer Richtung. Ebenso fluchten die konkaven Bereiche 6b', 6b" der beiden Griffelemente 1, 2. Dadurch kann die Grundstellung leicht erkannt werden. Falls gewünscht, können auch Markierungen vorgesehen sein, die die Verdrehstellung von erstem und zweitem Griffelement 1, 2 leicht erkennbar machen, etwa ein Pfeil 7a auf einem der Griffelemente (hier dem zweiten Griffelement 2) und beschriftete Punkte 7b, 7c auf dem anderen der Griffelemente (hier dem ersten Griffelement 1); in Fig. 1 a wird mit dem Pfeil 7a gerade der mit G beschriftete Punkt 7b angezeigt.

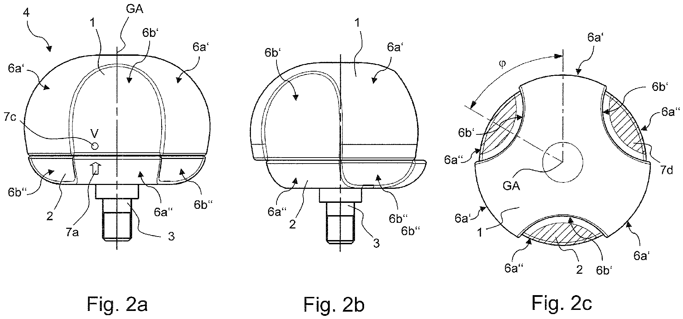

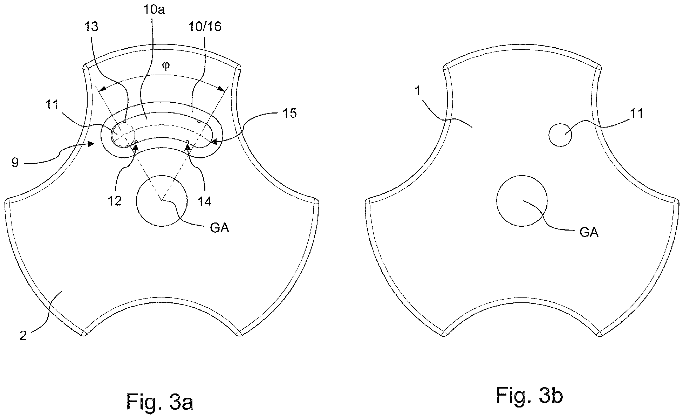

Wird nun das erste Griffelement 1 gegenüber dem zweiten Griffelement 2 aus der Grundstellung um einen relativen Winkel ϕ von hier 60° in die verdrehte Stellung verdreht, wie in den **Figuren 2a bis 2c** in schematischen Seitenansichten (Fig. 2a, 2b) und in schematischer Aufsicht (Fig. 2c) dargestellt, so stehen die konvexen Bereiche 6a' des ersten Griffelements 1 über den konkaven Bereichen 6b" des zweiten Griffelements 2, und die konkaven Bereiche 6b' des ersten Griffelements 1 über den konvexen Bereichen 6a" des zweiten Griffelements 2. Allein dadurch ist die verdrehte Stellung bei der gezeigten Ausführungsform gut von der Grundstellung unterscheidbar. In der gezeigten Ausführungsform werden in der verdrehten Stellung außerdem farbliche Markierungen 7d auf der Stirnseite (Oberseite) des zweiten Griffelements 2, die dem ersten Griffelement 1 zugewandt ist, freigelegt, die zuvor durch das erste Griffelement 1 verdeckt waren. Der Pfeil 7a zeigt nun zum anderen, mit V beschrifteten Punkt 7c, vgl. Fig. 2a. Das erste Griffelement 1 kann anschlagbedingt gegenüber dem zweiten Griffelement 2 nicht über die verdrehte Stellung hinaus verdreht werden (siehe dazu Fig. 3a ff).

Man beachte, dass das Wellenelement 3 auch mit einem Innengewinde 8 ausgebildet sein kann, wie in Figur 1d dargestellt. Ebenso ist es möglich, das Wellenelement mit einer glatten Außenfläche oder mit einer glatten Innenbohrung für einen Presssitz oder auch mit einem Sicherungsstift (Querstift) auszubilden. Mit dem Wellenelement 3 ist in allen Fällen ein Moment übertragbar, wobei das Wellenelement 3 an einer (nicht näher dargestellten) Struktur befestigt ist.

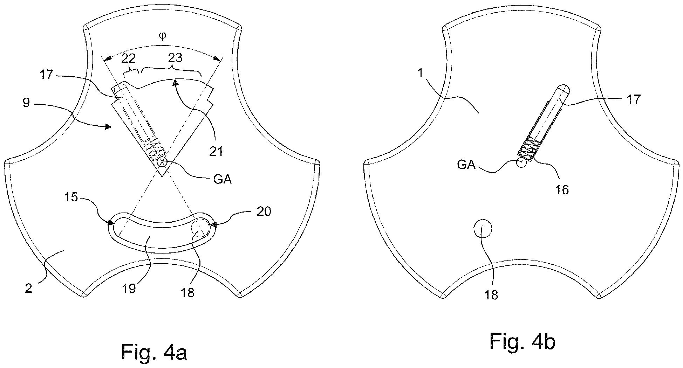

Das erste Griffelement und das zweite Griffelement sind miteinander durch eine Kopplungsvorrichtung verkoppelt; in den nachfolgenden Figuren 3a-4b werden hierzu beispielhaft Bauformen erläutert, wobei nur die Bauform gemäß Fig. 4a, 4b erfindungsgemäß ist. Die Bauformen können in einer Griffanordnung, wie sie in den Figuren 1a bis 2c vorgestellt wurde, verwendet werden. Die Figuren 3a bis 4b zeigen jeweils Aufsichten auf die einander zugewandten Stirnseiten der Griffelemente; man beachte, dass die Zuordnung der Bauteile zu den Griffelementen (Anordnung am ersten oder zweiten Griffelement) auch vertauscht werden kann.

Die **Figuren 3a und 3b** zeigen eine nicht erfindungsgemäße Bauform für eine Kopplungsanordnung 9, mit einem elastisch spreizbaren Führungskanal-Bauteil 10, das im zweiten Griffelement 2 gehalten ist, wobei ein Kopplungsstift 11 des ersten Griffelements 1 in einen Führungskanal 10a des Führungskanal-Bauteils 10 hineinragt, zur allgemeinen Erläuterung.

In der Grundstellung (für die in Fig. 3a der Kopplungsstift 11 gestrichelt eingezeichnet ist) liegt der Kopplungsstift 11 vor einer Engstelle 12, die durch zwei Vorsprünge 13 im Führungskanal-Bauteil 10 ausgebildet ist. Wird das erste Griffelement 1 aus der Grundstellung in Richtung der verdrehten Stellung verdreht (in Fig. 3a mit dem Kopplungsstift 11 im Uhrzeigersinn), so muss das Führungskanal-Bauteil 12 so weit gespreizt werden, dass die Kanalbreite an der Engstelle 12 ausreicht, dass der Kopplungsstift 11 passieren kann. Dazu muss ein gewisses Drehmoment vom Betrag |Mₛₚₐₙₙ| am ersten Griffelement 1 aufgebracht werden; man beachte, dass in Drehrichtung wirkende Kraft an den Vorsprüngen 13 in radiale Spreizkraft umgelenkt wird. Nach dem Passieren der Engstelle 12 geht das Führungskanal-Bauteil 10 wieder in einen nichtgespreizten Zustand zurück. Das Führungskanal-Bauteil 10 wirkt insofern als ein Federelement 16.

Im vorliegenden Fall ist eine weitere Engstelle 14 im Führungskanal-Bauteil 10 eingerichtet, die in ähnlicher Weise wirkt wie die Engstelle 12 und kurz vor Erreichen der (vollständig) verdrehten Stellung überwunden werden muss; dazu muss erneut |Mₛₚₐₙₙ| aufgebracht werden.

Mit Erreichen der vollständig verdrehten Stellung, in welcher der Kopplungsstift 11 am in Fig. 3a rechten Ende des Führungskanals 10a angeordnet ist (nicht eingezeichnet), kann das erste Griffelement 1 nicht weiter verdreht werden; der rechte Teil des Führungskanal-Bauteils 10 wirkt als Anschlag 15 für den Kopplungsstift 11. In dieser Stellung kann ein prinzipiell beliebiges Moment bezüglich der bisherigen Drehrichtung vom ersten Griffelement 1 auf das Wellenelement übertragen werden.

Um von der verdrehten Stellung zurück in die Grundstellung zu verschwenken, muss am ersten Griffelement 1 abermals betragsmäßig das Moment |Mₛₚₐₙₙ| an den beiden Engstellen 12, 14 aufgebracht werden, wenngleich mit umgekehrter Drehrichtung. Die zweite Engstelle 14 verhindert dabei, dass die verdrehte Stellung schon bei geringen Momenten verlassen werden kann.

Ein Benutzer, der die Griffanordnung in die verdrehte Stellung verbracht hat, kann sich sicher sein, dass dadurch das erste Griffelement 1 zumindest mit einem Drehmoment von |Mₛₚₐₙₙ| angezogen wurde; ansonsten hätten die Engstellen 12, 14 nicht passiert werden können.

In den Figuren 4a und 4b ist eine erfindungsgemäße Bauform einer Kopplungsanordnung 9 dargestellt. Dabei ist am ersten Griffelement 1 ein gegen ein Federelement 16, hier eine Druckfeder, in gerader Richtung verschiebbarer Kopplungsbolzen 17 mit abgerundeter Spitze vorgesehen. Weiterhin ist ein Anschlagstift 18 am ersten Griffelement 1 ausgebildet, der in einen Anschlagkanal 19 am zweiten Griffelement 2 eingreift und eine gegenseitige Verdrehung von erstem und zweitem Griffelement 1, 2 in der Grundstellung mit einem Hilfsanschlag 20 und in der verdrehten Stellung mit einem Anschlag 15 begrenzt.

Der Kopplungsbolzen 17, der in Fig. 4a entsprechend der Grundstellung ebenso wie der Anschlagstift 18 gestrichelt eingezeichnet ist, steht mit einem Führungselement 21 in Kontakt. Das Führungselement 21 wird hier von einer Ausnehmung im zweiten Griffelement 2 gebildet, an dem eine erste Rampe 22 und eine zweite Rampe 23 ausgebildet sind, an denen die abgerundete Spitze des Kopplungsstifts 17 entlang gleiten kann. Dadurch wird die Stauchung des Federelements 16 über eine Verdrehbewegung von erstem und zweitem Griffelement 1, 2 bestimmt.

Ausgehend von der Grundstellung, in der das Federelement 16 weitgehend entspannt ist, muss der Kopplungsstift 17 für eine Verdrehung auf die verdrehte Stellung zu (Bewegung des Kopplungsstifts 17 im Uhrzeigersinn in Fig. 4a) unmittelbar die kurze, steile, erste Rampe 22 überwinden. Dafür ist ein betragsmäßig relativ großes Drehmoment |Mₛₚₐₙₙ| notwendig, denn das Federelement 16 muss über einen relativ kleinen Drehwinkel (hier ca. 1/5 des vollen Drehwinkels ϕ) zusammengedrückt werden. Am Übergang der Rampen 22, 23 ist das Federelement 16 maximal verformt und entsprechend maximal verspannt. Nach Erreichen der zweiten Rampe 23 unterstützt die Federkraft geringfügig das weitere Verdrehen in die vollständig verdrehte Stellung durch allmähliches Entspannen des Federelements 16, bis schließlich der Kopplungsbolzen 17 am linken Ende der zweiten Rampe 23 angekommen ist.

Wird umgekehrt nach Erreichen der vollständig verdrehten Stellung das erste Griffelement 1 zurück auf die Grundstellung zu gedreht (Bewegung des Kopplungsstifts 17 gegen den Uhrzeigersinn in Fig. 4a, ausgehend von der linken Seite), so genügt ein betragsmäßig relativ kleines Drehmoment |Mₗₒₛ|, denn das Federelement 16 kann über einen relativ großen Drehwinkel (hier ca. 4/5 des vollen Drehwinkels ϕ) entsprechend der langen, flachen, zweiten Rampe 23 zusammengedrückt werden. Durch die Verhältnisse der Längen der Rampen 22, 23 ergibt sich im gezeigten Ausführungsbeispiel in etwa |Mₛₚₐₙₙ| = 4*|Mₗₒₛ|.

Bei dieser Ausführungsform ist sichergestellt, dass eine geringfügige Auslenkung aus der vollständig verdrehten Stellung allenfalls eine Lockerung im Verhältnis der maximalen Momente |Mₗₒₛ| / |Mₛₚₐₙₙ|, hier also um ¼, bewirken kann.

Man beachte, dass mit dem Kopplungsbolzen 17 und dem Führungselement 21 bereits ein oder mehrere Anschläge zur Begrenzung der relativen Verdrehposition von erstem und zweitem Griffelement 1, 2 eingerichtet werden können; jedoch kann durch den Anschlagbolzen 18 und den Anschlagkanal 19 ein deutlich robusterer Aufbau erreicht werden.

## Patentansprüche

1. Drehgriffanordnung (4), umfassend
- ein erstes Griffelement (1), und
- ein zweites Griffelement (2),
wobei das erste Griffelement (1) bezüglich einer Griffelementachse (GA) drehbar relativ zum zweiten Griffelement (2) angeordnet ist,
wobei das erste Griffelement (1) gegenüber dem zweiten Griffelement (2) zumindest zwischen einer Grundstellung und einer verdrehten Stellung, in der ein gegenseitiger Anschlag (15) ein weiteres Verdrehen blockiert, verdrehbar ist,
wobei eine Kopplungsvorrichtung (9) mit mindestens einem Federelement (16) vorgesehen ist, derart dass das mindestens eine Federelement (16) durch Verdrehen des ersten Griffelements (1) gegenüber dem zweiten Griffelement (2) aus der Grundstellung in Richtung der verdrehten Stellung gegen eine Federkraft verformt wird, und wobei durch mindestens eine Markierung (7a-7d) an der Drehgriffanordnung (4) und/oder durch den Aufbau der Drehgriffanordnung (4) die Grundstellung von der verdrehten Stellung eindeutig unterscheidbar ist,
**dadurch gekennzeichnet,**
**dass** die Kopplungsvorrichtung (9) an einem der Griffelemente (1, 2) einen relativ zu diesem Griffelement (1, 2) gegen das Federelement (16) verschiebbaren Kopplungsbolzen (17) ausbildet, und am anderen der Griffelemente (1, 2) ein Führungselement (21) ausbildet, wobei beim Verdrehen des ersten Griffelements (1) gegen das zweite Griffelement (2) das Führungselement (21) zumindest über einen Teil des relativen Drehwinkels ϕ zwischen der Grundstellung und der verdrehten Stellung mit dem Kopplungsbolzen (17) in Kontakt steht und diesen relativ zu dem Griffelement (1, 2), an dem er ausgebildet ist, gegen das Federelement (16) verfährt oder vom Federelement (16) weg verfahren lässt,
und **dass** die Drehgriffanordnung (4) ein Wellenelement (3) umfasst, wobei das Wellenelement (3) starr mit dem zweiten Griffelement (2) verbunden ist.

2. Drehgriffanordnung (4) nach Anspruch 1, **dadurch gekennzeichnet, dass** in einer der Stellungen, insbesondere der Grundstellung, eine farbliche Markierung (7d) an einem der Griffelemente (1, 2), insbesondere am zweiten Griffelement (2), durch das andere Griffelement (1, 2), insbesondere das erste Griffelement (1), verdeckt ist, und in der verdrehten Stellung die farbliche Markierung (7d) freiliegt.

3. Drehgriffanordnung (4) nach Anspruch 1 oder 2, **dadurch gekennzeichnet, dass** zumindest ein Teil des zweiten Griffelements (2) außerhalb des ersten Griffelements (1) angeordnet ist, dass die Griffelemente (1, 2) eine N-zählige Symmetrie bezüglich der Griffelementachse (GA) aufweisen, und dass sich die Grundstellung und die verdrehte Stellung um einen relativen Drehwinkel ϕ von zumindest näherungsweise ϕ=360°/(2*N) unterscheiden.

4. Drehgriffanordnung (4) nach einem der vorhergehenden Ansprüche,
**dadurch gekennzeichnet, dass** unmittelbar bei Verlassen der Grundstellung das Federelement (16) gegen die Federkraft verformt werden muss, insbesondere maximal verformt werden muss.

5. Drehgriffanordnung (4) nach einem der vorhergehenden Ansprüche,
**dadurch gekennzeichnet, dass** auch beim Verdrehen des ersten Griffelements (1) gegenüber dem zweiten Griffelement (2) aus der verdrehten Stellung in Richtung der Grundstellung das Federelement (16) gegen die Federkraft verformt werden muss.

6. Drehgriffanordnung (4) nach Anspruch 5, **dadurch gekennzeichnet, dass** unmittelbar bei Verlassen der verdrehten Stellung das Federelement (16) gegen die Federkraft verformt werden muss, insbesondere maximal verformt werden muss.

7. Drehgriffanordnung (4) nach einem der Ansprüche 5 oder 6, **dadurch gekennzeichnet, dass** der Betrag des maximal notwendigen Moments |Mₛₚₐₙₙ|, um das erste Griffelement (1) gegenüber dem zweiten Griffelement (2) aus der Grundstellung in die verdrehte Stellung zu überführen, größer ist als der Betrag des maximal notwendigen Moments |Mₗₒₛ|, um das erste Griffelement (1) gegenüber dem zweiten Griffelement (2) aus der verdrehten Stellung in die Grundstellung zu überführen,
insbesondere wobei |Mₛₚₐₙₙ| ≥ 3*|Mₗₒₛ|.

8. Drehgriffanordnung (4) nach einem der vorhergehenden Ansprüche,
**dadurch gekennzeichnet, dass** das Führungselement (21) den Kopplungsbolzen (17) mit einer ersten Rampe (22) von der Grundstellung weg in eine maximal verformte Stellung des Federelements (16) führt, und den Kopplungsbolzen (17) mit einer zweiten, gegenüber der ersten Rampe (22) flacheren Rampe (23) von der verdrehten Stellung weg in die maximal verformte Stellung des Federelements (16) führt.

9. Drehgriffanordnung (4) nach einem der vorhergehenden Ansprüche,
**dadurch gekennzeichnet, dass** das erste Griffelement (1) von der Grundstellung weg rechts herum in Richtung der verdrehten Stellung drehbar ist.

10. Drehgriffanordnung (4) nach einem der Ansprüche 1 bis 9, **dadurch gekennzeichnet, dass** ein Hilfsanschlag (20) vorgesehen ist, der auch in der Grundstellung ein weiteres Verdrehen des ersten Griffelements (1) gegenüber dem zweiten Griffelement (2) blockiert.

11. Drehgriffanordnung (4) nach einem der Ansprüche 1 bis 10, **dadurch gekennzeichnet, dass** Wellenelement (3) ein Außengewinde (5) aufweist und aus dem zweiten Griffelement (2) herausragt.

12. Drehgriffanordnung (4) nach einem der Ansprüche 1 bis 10, **dadurch gekennzeichnet, dass** das Wellenelement (3) ein Innengewinde (8) aufweist,
insbesondere wobei das Wellenelement (3) ganz oder teilweise im zweiten Griffelement (2) aufgenommen ist oder in das zweite Griffelement (2) integriert ist.

13. Drehgriffanordnung (4) nach einem der vorhergehenden Ansprüche,
**dadurch gekennzeichnet, dass** der relative Drehwinkel ϕ des ersten und zweiten Griffelements (1, 2) zwischen der Grundstellung und der verdrehten Stellung zwischen 22,5° und 90°, bevorzugt zwischen 30° und 60°, beträgt.

## Claims

1. Rotary handle arrangement (4) comprising
- a first grip element (1), and
- a second grip element (2),
wherein the first grip element (1) is arranged to be rotatable with respect to a grip element axis (GA) relative to the second grip element (2),
wherein the first grip element (1) can be rotated with respect to the second grip element (2) at least between a basic position and a rotated position in which mutual abutment (15) prevents further rotation,
wherein a coupling device (9) is provided, which comprises at least one spring element (16) such that the at least one spring element (16) is deformed against a spring force by rotating the first grip element (1) with respect to the second grip element (2) out of the basic position in the direction towards the rotated position,
and wherein the basic position can be unambiguously distinguished from the rotated position by at least one marking (7a-7d) on the rotary handle arrangement (4) and/or by the construction of the rotary handle arrangement (4),
**characterized in that**
a coupling bolt (17) is formed on the coupling device (9) of one of the grip elements (1, 2), which coupling bolt (17) can be displaced relative to this grip element (1, 2) against the spring element (16), and a guiding element (21) is formed on the other one of the grip elements (1, 2), wherein when rotating the first grip element (1) with respect to the second grip element (2), the guiding element (21) is in contact with the coupling bolt (17) at least over part of the relative angle of rotation ϕ between the basic position and the rotated position and displaces it relative to the grip element (1, 2) on which it is formed towards the spring element (16) or away from the spring element (16), and that the rotary handle arrangement (4) comprises a shaft element (3), wherein the shaft element (3) is rigidly connected to the second grip element (2).

2. Rotary handle arrangement (4) according to claim 1, **characterized in that** in one of the positions, in particular the basic position, a colour marking (7d) on one of the grip elements (1, 2), in particular on the second grip element (2), is covered by the other grip element (1, 2), in particular the first grip element (1), and the colour marking (7d) is exposed in the rotated position.

3. Rotary handle arrangement (4) according to claim 1, or 2, **characterized in that** at least part of the second grip element (2) is arranged outside of the first grip element (1), that the grip elements (1, 2) have an N-fold symmetry with respect to the grip element axis (GA) and that the basic position and the rotated position differ from one another by a relative angle of rotation ϕ of at least approximately ϕ=360°/(2*N).

4. Rotary handle arrangement (4) according to any one of the preceding claims, **characterized in that** immediately upon leaving the basic position, the spring element (16) must be deformed, in particular maximally deformed, against the spring force.

5. Rotary handle arrangement (4) according to any one of the preceding claims, **characterized in that** also upon rotation of the first grip element (1) with respect to the second grip element (2) out of the rotated position towards the basic position, the spring element (16) must be deformed against the spring force.

6. Rotary handle arrangement (4) according to claim 5, **characterized in that** immediately upon leaving the rotated position, the spring element (16) must be deformed, in particular maximally deformed, against the spring force.

7. Rotary handle arrangement (4) according to any one of the claims 5 or 6, **characterized in that** the amount of the maximally required moment |Mₛₚₐₙₙ| for transferring the first grip element (1) with respect to the second grip element (2) from the basic position into the rotated position is larger than the amount of the maximally required moment |Mₗₒₛ| for transferring the first grip element (1) with respect to the second grip element (2) from the rotated position into the basic position, in particular wherein |Mₛₚₐₙₙ|≥3*|Mₗₒₛ|.

8. Rotary handle arrangement (4) according to any one of the preceding claims, **characterized in that** the guiding element (21) guides the coupling bolt (17) away from the basic position into a maximally deformed position of the spring element (16) with a first ramp (22), and guides the coupling bolt (17) away from the rotated position into the maximally deformed position of the spring element (16) with a second ramp (23), which has a lower slope than the first ramp (22).

9. Rotary handle arrangement (4) according to any one of the preceding claims, **characterized in that** the first grip element (1) can be rotated from the basic position to the right towards the rotated position.

10. Rotary handle arrangement (4) according to any one of the claims 1 to 9, **characterized in that** an auxiliary stop (20) is provided which in the basic position also blocks further rotation of the first grip element (1) with respect to the second grip element (2).

11. Rotary handle arrangement (4) according to any one of the claims 1 to 10, **characterized in that** the shaft element (3) has an outer thread (5) and projects out of the second grip element (2).

12. Rotary handle arrangement (4) according to any one of the claims 1 to 10, **characterized in that** the shaft element (3) has an inner thread (8),
in particular wherein the shaft element (3) is completely or partially received in the second grip element (2) or is integrated in the second grip element (2).

13. Rotary handle arrangement (4) according to any one of the preceding claims, **characterized in that** the relative angle of rotation ϕ of the first and second grip elements (1, 2) between the basic position and the rotated position is between 22.5° and 90°, preferably between 30° and 60°.

## Revendications

1. Poignée rotative (4) comprenant
- un premier élément de poignée (1) et
- un second élément de poignée (2),
le premier élément de poignée (1) pouvant tourner par rapport à un axe de l'élément de poignée (GA) disposé relativement au second élément de poignée (2), le premier élément de poignée (1) pouvant tourner par rapport au second élément de poignée (2) au moins entre une position initiale et une position tournée dans laquelle une butée mutuelle (15) bloque une rotation supplémentaire,
un dispositif d'accouplement (9) avec au moins un élément à ressort (16) étant prévu de telle sorte qu'au moins un élément à ressort se déforme contre une force de ressort par la rotation du premier élément de poignée (1) par rapport au second élément de poignée (2) à partir de la position initiale en direction de la position de rotation, avec au moins une marque (7a-7d) sur la poignée rotative (4) et / ou la construction de la poignée rotative (4) permettant de distinguer nettement la position initiale de la position de rotation,
**caractérisé en ce que**
le dispositif de couplage (9) forme un boulon de couplage déplaçable (17) contre l'élément à ressort (16) sur l'un des éléments de poignée (1, 2) relativement à cet élément de poignée (1, 2), et forme un élément de guidage (21) sur l'autre élément de poignée (1, 2), l'élément de guidage (21) étant en contact avec le boulon de couplage (17) lors de la rotation du premier élément de poignée (1) contre le deuxième élément de poignée (2), au moins sur une partie de l'angle de rotation relatif ϕ entre la position initiale et la position de rotation et le déplaçant par rapport à l'élément de poignée (1, 2) sur lequel il est formé ou l'éloignant de l'élément à ressort (16), et que la poignée rotative comporte un élément d'arbre (3), cet élément d'arbre disposant d'un accouplement rigide avec le second élément de poignée (2).

2. Poignée rotative (4) selon la revendication 1, **caractérisée en ce que** dans l'une des positions, notamment la position initiale, un marquage de couleur (7d) sur l'un des éléments de poignée (1, 2), notamment sur le second élément de poignée (2) est recouvert par l'autre élément de poignée (1, 2), notamment le premier élément de poignée (1) et que le marquage de couleur (7d) est visible dans la position de rotation.

3. Poignée rotative (4) selon la revendication 1 ou 2, **caractérisée en ce qu'**au moins une partie du second élément de poignée (2) est disposé à l'extérieur du premier élément de poignée (1) de telle sorte que les éléments de poignée (1, 2) présentent une symétrie de facteur N par rapport à l'axe d'élément de poignée (GA) et que la position initiale et la position de rotation soient différenciées par un angle de rotation relatif ϕ d'approximativement ϕ=360°/(2*N).

4. Poignée rotative (4) selon l'une des revendications précédentes, **caractérisée en ce que** l'élément à ressort (16) doit être déformé contre la forme de ressort immédiatement après le départ de la position initiale, notamment qu'il doive être déformé au maximum.

5. Poignée rotative (4) selon l'une des revendications précédentes, **caractérisée en ce que** l'élément à ressort (16) doit être déformé contre la forme de ressort, même lors de la rotation du premier élément de poignée (1) par rapport au second élément de poignée (2) à partir de la position de rotation vers la position initiale.

6. Poignée rotative (4) selon la revendication 5, **caractérisée en ce que** l'élément à ressort (16) doit être déformé contre la forme de ressort immédiatement après le départ de la position de rotation, notamment qu'il doive être déformé au maximum.

7. Poignée rotative (4) selon l'une des revendications 5 ou 6,
**caractérisée en ce que** l'amplitude du moment |Mₛₚₐₙₙ| maximum nécessaire pour déplacer le premier élément de poignée (1) de la position initiale vers la position de rotation par rapport au second élément de poignée (2) est supérieur à l'amplitude du couple |Mₗₒₛ| maximum nécessaire pour déplacer le premier élément de poignée (1) de la position de rotation vers la position initiale par rapport au second élément de poignée (2),
notamment avec |Mₛₚₐₙₙ| ≥ 3*|Mₗₒₛ|)

8. Poignée rotative (4) selon l'une des revendications précédentes,
**caractérisée en ce que** l'élément de guidage (21) guide le boulon de couplage (17) hors de la position initiale vers une position de déformation maximum de l'élément à ressort grâce à une première rampe (22) et guide le boulon de couplage (17) hors de la position de rotation vers une position de déformation maximum de l'élément à ressort grâce à une seconde rampe (23) plus plate que la première rampe (22).

9. Poignée rotative (4) selon l'une des revendications précédentes, **caractérisée en ce que** le premier élément de poignée (1) puisse tourner vers la droite de la position initiale vers la position de rotation.

10. Poignée rotative (4) selon l'une des revendications 1 à 9,
**caractérisée en ce qu'**une butée auxiliaire (20) est prévue, bloquant également en position initiale une rotation supplémentaire du premier élément de poignée (1) par rapport au second élément de poignée (2).

11. Poignée rotative (4) selon l'une des revendications 1 à 10,
**caractérisée en ce que** l'élément d'arbre (3) présente un filetage extérieur (5) et dépasse du second élément de poignée (2).

12. Poignée rotative (4) selon l'une des revendications 1 à 10,
**caractérisée en ce que** l'élément d'arbre (3) présente un filetage intérieur (8),
notamment avec l'élément d'arbre (3) entièrement ou partiellement inséré ou reçu dans le second élément de poignée (2) ou intégré dans le second élément de poignée (2).

13. Poignée rotative (4) selon l'une des revendications précédentes, **caractérisée en ce que** l'angle de rotation relatif ϕ des premier et second éléments de poignée (1, 2) entre la position initiale et la position de rotation mesure entre 22,5° et 90°, de préférence entre 30° et 60°.
